# EUROPEAN PATENT APPLICATION

(11) **EP 1 883 023 A1**
(43) Date of publication of application: **30.01.2008**
(21) Application number: 07108874.4
(22) Date of filing: 24.05.2007
(51) Int. Cl.: G06F 17/30

(54) **Improved method for searching for patterns in text**

(30) Priority: 28.07.2006 GB 0614986
(71) Applicant: ROKE MANOR RESEARCH LIMITED, Romsey, Hants SO51 0ZN (GB)
(72) Inventor: Duxbury, Neil, Westbury, Wiltshire BA13 2GA (GB)
(74) Representative: Payne, Janice Julia

(57) **Abstract**

A method of searching for one or more patterns in a text using Boyer-Moore methodology, including the step of wherein once a match of an ngram is determined, entering into a routine which jumps forward so as to compare more initial characters so as to provide faster rejection.

## Description

In many information retrieval applications it is necessary to be able to locate quickly some or all occurrences of user-specified patterns in data. The classical solution to this problem involves the use of the Commentz-Walter. Methodology. A string matching algorithm is described in the Proceedings of the 6th International Colloquium on Automata, Languages and Programming, number 71 in Lecture Notes in Computer Science, pages 118 - 132. Springer - Verlag, 1979. The performance of the Commentz Walter algorithm is provided by its ability to identify a set of patterns whilst only examining a sub linear portion of the data. This capability is provided via the generalisation of the Boyer Moore methodology to a set of patterns (R. S. Boyer and J. S. Moore. "A fast string searching algorithm". Communication of the ACM, 20(10):762-772, 1977). The Boyer Moore approach using a pattern skipping technique that is based on the characters appearing in the pattern set.

The algorithm of Boyer and Moore defines a number of skip heuristics that allow the instances of a search pattern to be found within a text whilst only examining a subset of the characters within the text. The Boyer Moore algorithm compares a pattern with a text from right to left.

### Example 1 (prior art)

The following example illustrates this situation:

**Table 1**

| | |
|---|---|
| POSITION | 0 1 2 3 4 5 6 7 8 9 ... |
| TEXT | b a b a c a b a c b a |
| PATTERN | b a b a c |

In this case the search starts at position 4; the characters of the pattern are then matched in the order 4, 3, 2, 1, 0. If the search reaches the start of the pattern then an occurrence of the pattern in the text has been found. If a mismatch occurs between one of the characters of the pattern and one of the characters of the text a mismatch heuristic is applied to determine the position of the next match attempt.

The full Boyer Moore approach makes use of the heuristics described as follows: if the text symbol that is compared with the rightmost pattern symbol does not occur in the pattern at all, then the pattern can be skipped by m positions beyond this text symbol where m is equal to the length of the search

**Table 2**

| | |
|---|---|
| POSITION | 0 1 2 3 4 5 6 7 8 9 ... |
| TEXT | b a b a d a b a c b a |
| PATTERN | b a b a c b a b a c |

The first comparison at position 4 produces a mismatch. The text symbol d does not occur in the pattern. Therefore, the pattern cannot match at any of the positions 0...4. Thus, the start of the pattern can be skiped to position 5 and position 9 is then tested. This will be referred to in the following as the mismatch rule.

If the text symbol that causes a mismatch is contained within the pattern then the pattern can be skiped so that the rightmost occurrence of the test symbol in the pattern is aligned to this text symbol. The following example illustrates this situation.

**Table 3**

| | |
|---|---|
| POSITION | 0 1 2 3 4 5 6 7 8 9 |
| TEXT | a b b a b a b a c b a |
| PATTERN | b a b a c b a b a c |

This heuristic is generally referred to as the bad character heuristic or bad character rule.

The Commentz - Walter algorithm is a natural extension of the Boyer Moore algorithm to cover the case where a search is performed for multiple patterns simultaneously. The Commentz - Walter algorithm represents the pattern set using a trie of the reversed patterns. A position pos is slid along the text, beginning at position *lmin* (where *lmin* is the shortest pattern length). For each position in the text we read backwards the longest suffix of the text that is also a suffix of one of the patterns. If we find an occurrence we mark it. Then the position of the search is skipped to the right using the Boyer Moore skip heuristics extended to a set of patterns. To avoid skipping any occurrence when skipping the position pos it is necessary to bound the maximal possible skip to *lmin.*

### Example 2 (prior art)

Below shows another example of the prior art where there are three patterns to be searched : abbad, abef, and ghi. The text to be searched is shown at the top and comprises the ordered letters of the alphabet.

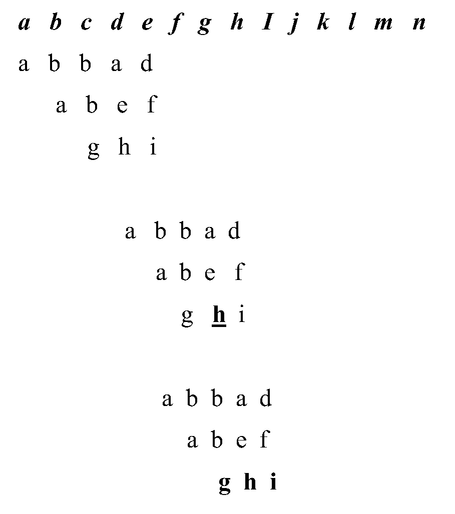

For each character of each pattern (or just the shortest one a skip value is computed previously)see table . The set of three patterns is aligned in the first attempt as shown, at position 1. No match (with **"e")** is found so the patterns. Further more **"e"** is not present in any patterns so are each skipped by a value of 3 places (equal to the shortest search string. Although the end (right most character of each parent does not match the **"h"** in the text at position 2, and **"h"** is found in **"g h i". "h"** has a skip value of 1 so the pattern set is skipped by 1, to position 3 and a match is found.

### Extension to ngrams

An *ngram* is a sequence of 1 or more characters where the, n, denotes the number of characters in the *gram* e.g. a monogram contains 1 character and a digram contains two characters, etc. For large dictionaries the sizes of the skips generated by the bad character and mismatch rules get progressively smaller. This is due in part to the fact that most of the characters in the skip table appear close to or at the right hand edge of one of the patterns within the pattern set. Consequently, the size of the skip that can be obtains is small compared to the length of the pattern. In this scenario the performance of the algorithm is compromised as the effort spent in calculating the skip value is not compensated by skips available. A method of extending the utility of the approach is to base the skipping on ngrams rather than monograms. In this instance the probability of an ngram appearing gets progressively smaller as the length of the ngram is increased. Thus, useful skip distances can be achieved and the performance of the algorithm can be maintained. In order to use ngram skipping an extra heuristic must be used to ensure that patterns are not missed. In this case the largest possible skip distance for ngrams whose last character is equal to the first character of the patterns whose length is equal to *lmin* is *lmin* - 1. An initialisation phase is used to create a master ngram skip table from the set of patterns as follows: each pattern is decomposed into its set of ngrams. For each pattern a skip value for each of the ngrams is calculated. The skip value is defined by the number of character positions that the algorithm skips forward in the event of finding the ngram in the text. The minimum skip value for each ngram taken over all the patterns is then stored in a skip database. Once the skip values have been computed the maximal skip criteria are applied. In this step each entry in the database is checked to ensure that the skip value does not exceed *lmin.* In the event that the skip value exceeds *lmin* it is reset to *lmin.* If a particular ngram is not present in the set of patterns then the skip distance associated with that ngram is *lmin.* Then for each of the ngrams whose last character matches the first character of any pattern in the set of patterns whose length is equal to *lmin* the skip value is set to *lmin* - 1.

### Example 3 (prior art)

For example, using a digram skip database the di-grams and skips of the patterns 'pebble' and 'pebbles' are as follows: Table 4

| **Digram** | **Skip** |
|---|---|
| pe | 4 |
| eb | 3 |
| bb | 2 |
| bl | 1 |
| le | 0 |
| es | 0 |
| ANY OTHER DIGRAM | 6 *(lmin)* |

The performance of the algorithm can be significantly improved by providing a fast reject mechanism to prevent unnecessary searching of the pattern trie. A simplistic method to achieve this would be to use a suffix of a pattern as an index into a flat look up table. However, due to current memory constraints the number of character that can be represented by a single look up table is limited to a few characters. Indeed the address space required to represent a flat lookup table quickly escalates as the number of characters increase according to 2^{8*m} where, m is the number of characters. Clearly the memory costs of this approach are unworkable. However, the drawback with using a small number of characters is that it limits the effectiveness of the fast reject mechanism. One of the drawbacks of this approach is that as the size of the pattern set increases the utility of the skipping technique decreases resulting in poor performance. A second drawback is that in general these types of algorithms cannot be updated without recompiling their core data structures. For large pattern sets the cost of recompilation can be significant.

### Invention

It is an object of the invention to provide a faster algorithm based on pattern skipping followed so as to allow a fast reject mechanism followed by exhaustive matching that collectively provide enhanced throughput over the current approaches.

The invention comprises a method of searching for one or more patterns in a text using Boyer-Moore methodology, wherein once a match of an ngram is determined, entering into a routine which jumps forward so as to compare more initial characters so as to provide faster rejection.

This preferably includes comparing the first character (or ngram) of the search pattern.

Also wherein if the search text section which is to be compared with the search patterns includes a pre-designated character, searching for this character in the appropriate position in the search patterns.

The invention also comprises a method of searching for one or more patterns in a text using Boyer-Moore methodology, including the steps of forming a skip value for each ngram; comparing the current ngram with the skip value; if a zero skip is determined, skipping over the right hand most ngram, to another ngram, so that this right-hand most ngram is not compared with the current ngram of the text.

Preferably the first ngram to be compared is the last ngram of the search pattern but 1. In an alternative embodiment of this, there is included the step of formulating for each character a "next node" identifier, identifying which node to be jumped to is given in addition to the skip value.

Within the current algorithm these memory issues are avoided whilst still providing a high degree of rejection by encoding each patterns characters within a keyword trie. Within the keyword trie each node can have as many edges as are required to represent the patterns contained in the pattern set.

The addition of a skip value to each node of the keyword trie also allows the characters of each pattern to be visited in non-sequential order. This modification improves the mismatch performance of the algorithm as it allows the characters of a search pattern to be compared to the text in non-sequential order. This allows the algorithm to only examine the minimum number of characters necessary to determine that a mismatch has occurred.

### Example 3

Figure shows the word "spade" which is a pattern to be searched for in text. In prior art methodology when using an ngram of 1, the word would be located in the appropriate position in text and the rightmost character "e" would be compared with that in the text. If "e" was present then the next most right hand letter would be compared i.e. "d" and if this was matched the process would continue. This however is inefficient. For example if the text aligned to "spade" was "ipade" then the process would continue all the way to the last character before being rejected i.e. it is "i" and not "s". Under the invention if a match has been made, then the process jumps into a routine which allows faster rejection. For example after the "the e" is matched the routine may preferably jump straight to the first character to see if it is an "s". If not it may have saved a lot of time. Although this example as given relates to single characters (i.e. an ngram of 1) it is equally applicable to ngrams of any suitable length and multiple patterns.

### Example 4

In another example if say the search character (pattern) contains a rare character e.g. "x" in the English language, the routine may search the appropriate character in the text straightaway. As most times the match will be negative, the reject mechanism is faster.

### Example 5

The following example relates to an improved embodiment of the invention. In the following example the text comprises the characters of the English alphabet in order. The search patters are "**d e f g**" and "**a b c d**"

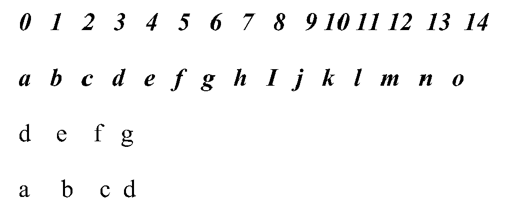

The following is a skip value table as used in the conventional Boyes more technique:

**Table 5**

| **Character** | **Skip** |
|---|---|
| a | 3 |
| b | 2 |
| c | 1 |
| d | 0 |
| e | 2 |
| f | **1** |
| g | 0 |

In the context of matching multiple patterns within the standard Commentz Walter approach once an ngram in the text has been aligned to a suffix of a pattern in the search set an exhaustive match on a keyword trie of reversed patterns is performed starting at the rightmost character of the potential alignment in the text Each character in the search pattern / text will have a skip value as defined and determined above.

Once the initial alignment has been made against the suffix **'d'** of **'a b c d'** the algorithm must traverse the keyword trie from the root using the characters of the search text taken in reverse order in order to discover the correct path through the tree to the sentinel marked 'abcd'. During this traversal it is necessary to reprocess the characters that have already been matched during the initial alignment phase i.e. the character **"d** " is processed twice i.e. in the Boyes-Moore standard technique, once the text is aligned, the algorithm looks at the rightmost character of each pattern in the text (in this instance "d") and compares, meaning that this means that there are two steps where the character **"d"** is analysed somehow.

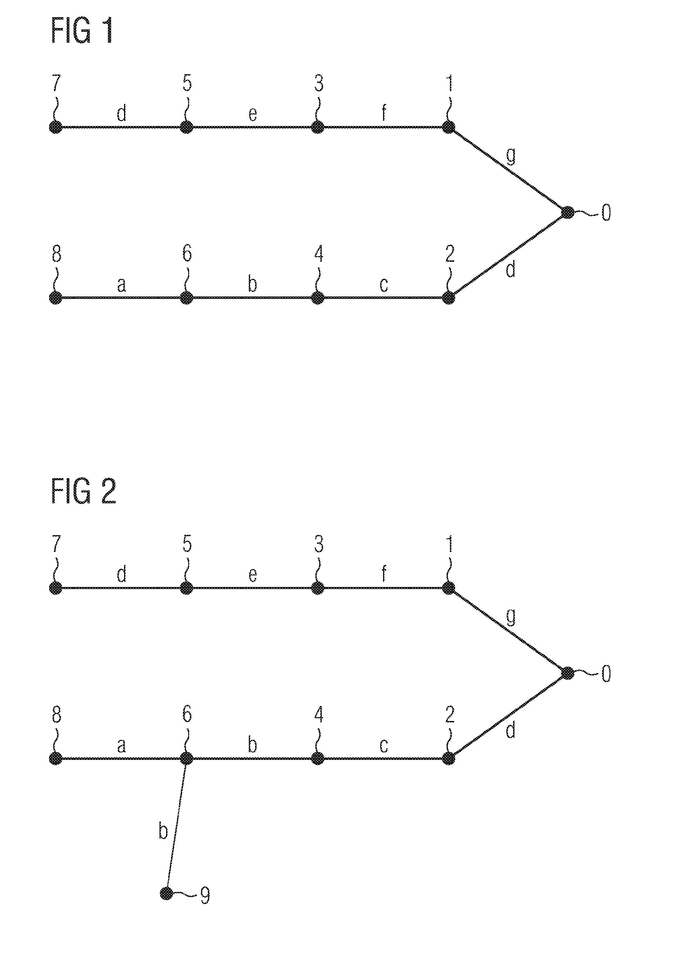

The invention reduces the extra step by allowing jumping straight to the next appropriate character for comparison, i.e. the character **"c".** Accordingly an extra column in the skip table needs to be determined called "NEXT NODE". This is shown in figure 1 where the nodes are numbered for the above example. Although this is also an extra computational step, it is only calculated once and save computing resources especially where there is a large pattern set. The table below shows the make up of the skip table according to the invention, where only the skip and next node values for **"d"** are shown. The next node value is **"2"** which is the numbered node This 'next node' column allows the algorithm to move directly to the correct location in the keyword trie without the additional comparisons. This methodology is equally applicable to ngrams of any length as the skip table will contain the same number of entries as there are branches exiting the root of the keyword trie. In this case we use the characters of the text to index the skip table. Then when the skip is found to be zero we simply look up the location of the appropriate path in the keyword trie in the next node column. This is shown in the table below (for character **"d"** only)

**Table 6**

| **Character Code** | **Skip** | **Next Node** |
|---|---|---|
| a | | |
| b | | |
| c | | |
| d | 0 | 2 |
| e | | |
| f | | |
| g | | |

This can be visualised with respect to a tree which is shown in figure which shows the node numbered **"2"** as the node with the character **"c".**

### Further enhancement

This further enhancement is enables the algorithm to skip forward to test characters (or ngrams) further up, i.e. more left hand characters, again which saves time. This is because if for example, we skip to the first letter of a pattern and we find this letter does not match we can forget about matching the pattern and so there. Thus this provides a short cut and saves (if thus rejected) having to go through each character in turn. This principle is also used in conjunction with the second invention. Where there are multiple patterns there may well be instances where there are search patterns with common suffices. E.g. **"a b c d"** and **"b b c d".** If one visualises this as a tree (see figure) one has to be careful not to jump further that a junction node, otherwise this may lead to missing patterns with different prefixes but with a common suffices. This is illustrate in figure 2 which shows the addition pattern **"b b c d"** in the search. A skip table which assist will show both the skip value as before, but the next node will be designated 8/6 which is the junction node. Another column in the table indicates "back skip" which indicates how much the algorithm has jumped forward/need to skip back....rd This allow the algorithm to know how far to move back in the search text.

Once the jump is completed the two paths sharing the suffix **'b c d'** can be differentiated by comparing the character before the **'b c d'** part. The remainder of the pattern can be matched exhaustively or the remaining vertices can be visited in any order until the pattern has either been matched or a mismatch has occurred.

**Table 7**

| Character (ngram) code | Skip Value | Next node (junction) | Back Step |
|---|---|---|---|
| a | | | |
| b | | | |
| c | | | |
| d | 0 | 6 | 2 |
| e | | | |
| f | | | |
| g | | | |
| h | | | |
| i | | | |
| J | | | |

The above methodology can be extended to cover the use of the fast reject mechanism described previously by adding a further column to the skip table that encodes the distance to be moved back through the search text to make the next comparison; at this point the remainder of the pattern can be matched exhaustively or the remaining vertices can be visited in any order until the pattern has either been matched or a mismatch has occurred. In the latter case each subsequent node must also contain a next node reference and a skip value to tell the algorithm which node and search text character to compare next.

Although this example is given relates to single characters (i.e. an ngram of 1) it is equally applicable to ngrams of any suitable length and multiple patterns.

## Claims

1. A method of searching for one or more patterns in a text using Boyer-Moore methodology, including the step of wherein once a match of an ngram is determined, entering into a routine which jumps forward so as to compare more initial characters so as to provide faster rejection.

2. A method as claim in claim 1 wherein the routine entered into includes comparing the first character of the search pattern.

3. A method as claimed in claim 1 wherein if the search text section which is to be compared with the search patterns includes a pre-designated character, searching for this character in the appropriate position in the search patterns.

4. A method of searching for one or more patterns in a text using Boyer-Moore methodology, including the initial step of
a) forming a skip value for each ngram;
b) comparing the current ngram with the skip value;
c) if a zero skip is determined, skipping over the right hand most ngram, to another ngram, so that this right-hand most ngram is not compared with the current ngram of the text.

5. A method as claimed in claim 4 wherein said first ngram to be compared is the last ngram of the search pattern but 1.

6. A method as claimed in claim 5 or 6 including the step of formulating for each character a "next node" identifier, identifying which node to be jumped to is given in addition to the skip value.

7. A method as claimed in claim 4, 5 or 6 wherein in step c) a the skipping step is such that where any search patterns have common suffixes, said skipping step does not move to an ngram which has a character which is not part of a common suffix.
